(19) Europäisches Patentamt / European Patent Office / Office européen des brevets

(11) **EP 2 785 090 A1**

(12) **DEMANDE DE BREVET EUROPEEN**

(43) Date de publication:
**01.10.2014 Bulletin 2014/40**

(51) Int Cl.:
*H04W 12/06* (2009.01)  *H04L 29/06* (2006.01)

(21) Numéro de dépôt: **13305364.5**

(22) Date de dépôt: **25.03.2013**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(71) Demandeur: **Gemalto SA**
**92190 Meudon (FR)**

(72) Inventeurs:
- **Fine, Jean-Yves**
  **13705 La Ciotat (FR)**
- **Dany, Vincent**
  **La Ciotat (FR)**
- **Gouget, Aline**
  **La Ciotat (FR)**
- **Proust, Philippe**
  **La Ciotat (FR)**
- **Robert, Marcel**
  **La Ciotat (FR)**

(54) **Procédé d'authentification mutuelle entre un élément de sécurité d'un terminal de télécommunications et un élément d'un réseau de télécommunications de type GSM**

(57) L'invention concerne un procédé d'authentification mutuelle entre un élément de sécurité (10) d'un terminal de télécommunications et un élément d'un réseau de télécommunications (11/12), le procédé s'appliquant dans un réseau de télécommunications de type GSM, le procédé consistant à :
- Transmettre du réseau de télécommunications à l'élément de sécurité (10) une commande d'exécution d'un algorithme d'authentification comprenant un jeton d'authentification (AUTN) élaboré par l'élément du réseau de télécommunications à partir d'une clé d'authentification (Ki) et la valeur d'un compteur de séquence réseau (SQréseau) ;
- Exécuter l'algorithme au niveau de l'élément de sécurité (10) et, si la clé d'authentification (Ki) est reconnue par l'élément de sécurité (10), vérifier qu'une valeur de compteur de séquence (SQsim) de l'élément de sécurité (10) est comprise dans un intervalle déterminé par rapport à la valeur du compteur de séquence réseau (SQréseau) et, si la valeur du compteur de séquence réseau (SQréseau) n'est pas comprise dans l'intervalle déterminé :
a) Vérifier que la valeur d'un compteur de l'élément de sécurité (10) est supérieure à une valeur limite et, si oui :
b) Transmettre un SMS du terminal de télécommunications à l'élément du réseau de télécommunications (11/12), cet SMS comprenant la valeur du compteur de séquence (SQsim) de l'élément de sécurité (10) ;
c) Au niveau de l'élément du réseau de télécommunications (11/12), synchroniser la valeur du compteur de séquence réseau (SQréseau) avec la valeur du compteur de séquence (SQsim) de l'élément de sécurité (10).

Fig. 4

Printed by Jouve, 75001 PARIS (FR)

EP 2 785 090 A1

**Description**

Le domaine de l'invention est celui des télécommunications dans des réseaux cellulaires de type GSM (2G).

Plus précisément, la présente invention concerne un procédé d'authentification mutuelle entre d'une part un élément de sécurité d'un terminal de télécommunications et d'autre part un élément d'un réseau de télécommunications cellulaire de seconde génération.

Plusieurs générations de réseaux de télécommunications cellulaires coexistent actuellement : les réseaux 2G (GSM), les réseaux 3G (UMTS) et les réseaux 4G (LTE).

Tous ces réseaux ont notamment pour vocation de permettre d'établir des communications entre des terminaux communiquant avec des éléments de sécurité (cartes SIM, UICC, USIM,...).

Ces éléments de sécurité se présentent habituellement sous la forme de cartes extractibles de leurs terminaux, habituellement constitués par des téléphones mobiles, des smartphones, des PDAs,... Il existe également des éléments de sécurité intégrés dans des modems faisant partie de terminaux ou de machines (donc non extractibles), ces machines étant des véhicules, des distributeurs de boissons, etc...

Les communications dans des réseaux de télécommunications ont évolué depuis plusieurs années : elles étaient (et sont toujours) essentiellement dédiées aux communications entre personnes physiques disposant de terminaux portables par exemple. Depuis quelques années, on assiste à une augmentation de communications entre machines, aussi appelées M2M (« Machine To Machine » en anglais).

Ce type de communications entre machines permet notamment d'effectuer des relevés de compteurs à distance (eau, électricité,..) ou d'interagir avec des véhicules automobiles (par exemple pour ouvrir leurs portes à distance, démarrer le véhicule, mettre en marche la climatisation,...). Il permet également d'ouvrir des portails à distance, fermer des volets électriques, ou plus généralement d'effectuer des fonctions de type domotique.

Les réseaux 2G permettent donc des communications de type M2M où un utilisateur peut activer une fonction sur un terminal distant.

Un des problèmes de ces communications M2M dans des réseaux de deuxième génération (GSM) est que seuls les éléments de sécurité sont authentifiés par les réseaux avec lesquels ils communiquent : il n'y a pas d'authentification du réseau par l'élément de sécurité en GSM.

L'authentification permet de vérifier que l'identité (IMSI ou TMSI) transmise par le terminal communiquant avec la carte SIM sur la voie radio est correcte afin de protéger d'une part l'opérateur contre l'utilisation frauduleuse de ses ressources, et d'autre part les abonnés en interdisant à des tierces personnes non autorisées d'utiliser leurs comptes. L'authentification de l'abonné peut être exigée du mobile par le réseau à chaque mise à jour de localisation, établissement d'appel (entrant ou sortant) et avant d'activer ou de désactiver certains services supplémentaires. Elle est également demandée lors de la mise en oeuvre de la clé de chiffrement sur certains canaux dédiés.

L'authentification GSM est basée sur un protocole de type challenge/response ainsi que sur des algorithmes de cryptographie à clé secrète. Cependant, comme déjà indiqué précédemment, dans un schéma GSM, le réseau authentifie la carte SIM mais la carte SIM n'authentifie pas le réseau. La carte SIM du terminal n'est donc pas en mesure de vérifier l'identité et la validité du réseau auquel le mobile est rattaché. Des attaques par de fausses stations de base sont donc possibles et ont d'ailleurs été observées, notamment dans le domaine M2M, où des portes de véhicules équipés d'applications SIMs ont pu être ouvertes à distance.

On se référera notamment à l'article intitulé « M2M Security - War texting Attacks » disponible à l'adresse suivante : http://m2m.gemalto.com/news-info/whitepapers.html.

Une solution à ce problème serait d'utiliser un mécanisme d'authentification de type 3G (UMTS) où une authentification mutuelle entre l'USIM (Universal SIM) et le réseau est réalisée. Cette solution ne s'applique cependant pas dans le cadre d'applications M2M car les modules M2M utilisent essentiellement une technologie GSM et non pas UMTS.

Le problème est donc que de très nombreux dispositifs actuels, notamment en M2M, utilisent des mécanismes GSM et non pas des mécanismes UMTS ou LTE pour leur authentification. Il n'existe donc pas de mécanisme d'authentification mutuelle dans les communications de type M2M.

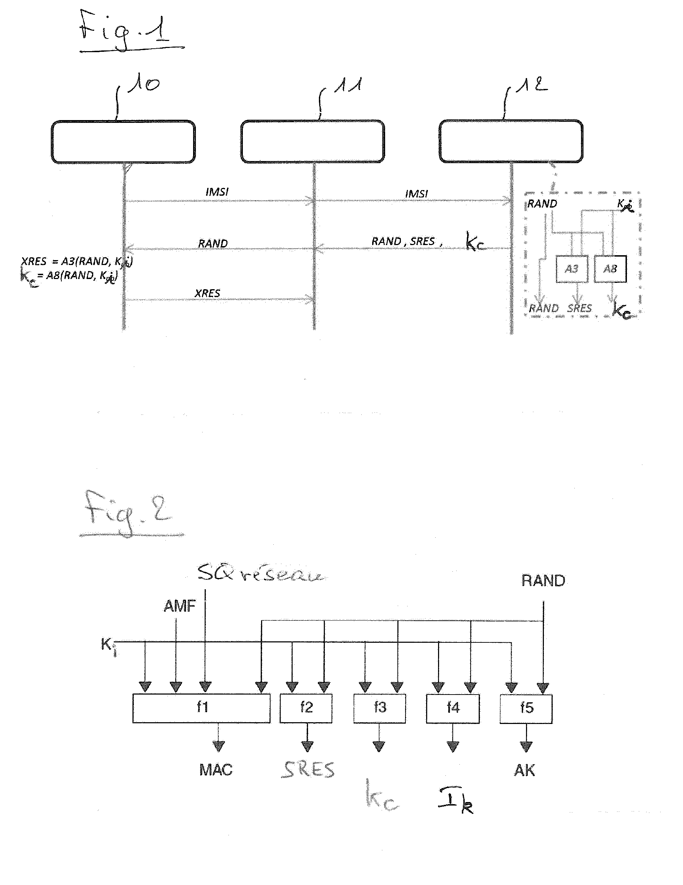

La figure 1 représente le mécanisme d'authentification retenu pour le GSM.

Un terminal comprenant un élément de sécurité tel qu'une carte SIM 10 communique avec son HLR/AuC 12 par l'intermédiaire d'un VLR 11. La carte SIM 10 transmet son IMSI (ou TMSI) au VLR 11 qui le retransmet au HLR/AuC 12. Celui-ci récupère la clé Ki unique correspondant à cet IMSI (TMSI) et génère une valeur aléatoire RAND de longueur 128 bits (16 octets). Un algorithme appelé A3 permet de générer une valeur SRES à partir de la clé Ki et de la valeur aléatoire RAND. Un autre algorithme, appelé A8, génère une clé de chiffrement Kc à partir de Ki et de RAND. Cette clé Kc sert de clé de chiffrement pour le trafic de l'usager et le trafic de signalisation entre le terminal et la station de base (BTS). Le HLR/AuC 12 transmet les valeurs RAND, SRES et Kc au VLR 11 qui retransmet uniquement la valeur aléatoire RAND à la carte SIM 10 dans une commande d'authentification AuthCmd(Rand).

La carte SIM 10 comprend la clé Ki utilisée par le HLR 12 et calcule, à l'aide de l'algorithme A3, une valeur XRES, à l'aide de la valeur aléatoire RAND reçue. Elle calcule par ailleurs la clé de chiffrement Kc à l'aide des mêmes éléments. La carte SIM 10 renvoie alors au VLR 11 la valeur XRES calculée localement. Le VLR procède alors à la comparaison de SRES et de XRES. Si les deux résultats sont identiques, l'abonné est authentifié. Dans le cas contraire, l'accès au réseau est refusé au terminal.

Nous décrivons ci-après le mécanisme d'authentification mis en oeuvre dans un réseau 3G (UMTS).

L'authentification 3G (AKA pour Authentication and Key Agreement) est, comme en GSM, basée sur une clé partagée Ki qui est uniquement présente dans le HLR et la carte USIM. Comme le HLR ne communique jamais directement avec le terminal, le VLR du serveur MSC réalise la procédure d'authentification.

Un à cinq vecteurs d'authentification (AV, Authentication Vector) sont téléchargés par le serveur MSC à partir du HLR lorsque le serveur MSC reçoit du terminal une demande d'attachement.

Les paramètres présents dans l'AV sont :

- RAND - le challenge qui sert en tant qu'un des paramètres d'entrée pour générer les 4 autres paramètres de l'AV. RAND est codé sur 128 bits ;
- SRES - le résultat attendu, utilisé par le réseau pour l'authentification de l'USIM (32 à 128 bits) ;
- AUTN - le jeton d'authentification utilisé par l'USIM pour l'authentification réseau (128 bits);
- Kc - la clé de session utilisée pour le chiffrement des communications (128 bits) ;
- Ik - une clé d'intégrité (128 bits) destinée à la protection de l'intégrité de la signalisation entre le terminal et le RNC (« Radio Network Controller » en anglais, l'élément du réseau UMTS qui contrôle les transmissions radio des stations de base - le RNC gère la répartition de la ressource radio, le chiffrement des données avant l'envoi au terminal, ainsi qu'une partie de la localisation des abonnés).

Des algorithmes f1 à f5 sont utilisés pour générer ces paramètres (voir figure 2). Un MAC (64 bits) est également généré (pour aider le terminal à authentifier le réseau, pas nécessairement le VLR). AK est une clé d'anonymat générée à partir de RAND et de Ki.

L'AuC génère un vecteur d'authentification à partir de la clé Ki qu'il partage avec l'USIM du terminal ainsi que deux autres paramètres qui sont : un numéro de séquence SQréseau (48 bits) et le nombre pseudo aléatoire RAND.

SQréseau est un compteur disposé dans le HLR/AuC et est individuel pour chaque USIM. De son côté, l'USIM garde trace d'un compteur de séquences appelé par la suite SQuicc qui est le plus grand numéro de séquences que l'USIM a accepté.

Le vecteur d'authentification généré comporte cinq parties : la valeur aléatoire (RAND), le résultat (SRES) qui sera demandé dans la procédure challenge/response avec l'USIM, le jeton d'authentification (AUTN) qui permet l'authentification du réseau auprès de l'USIM, la clé de session (Kc) qui servira pour le chiffrement, et la clé de contrôle d'intégrité (Ik) qui servira à la protection de l'intégrité des messages de signalisation.

Le jeton d'authentification AUTN est égal à :

$$AUTN = (SQréseau \oplus AK, AMF, MAC)$$

Avec AK = f5(RAND, Ki) et AMF (16 bits) un champ de gestion d'authentification.

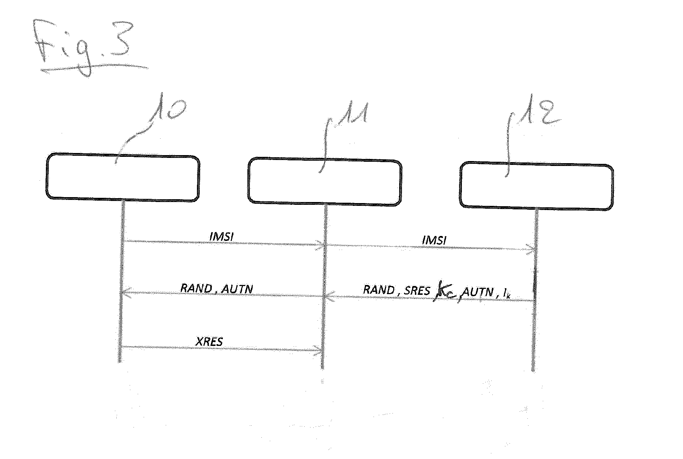

Comme représenté sur la figure 3, après transmission de l'IMSI au HLR/AuC 12, le VLR 11, à la réception du quintuplé (RAND, AUTN, SRES, Kc, Ik), transmet le challenge RAND et le jeton d'authentification AUTN qu'il a reçu du HLR à l'USIM et attend une réponse XRES de ce dernier.

Au niveau de l'USIM, AUTN est déconcaténé pour récupérer MAC, AMF et SQréseau $\oplus$ AK. Il calcule alors f5(RAND, Ki) = AK et en déduit SQréseau.

Si SQuicc est trop éloigné de SQréseau (non compris dans une certaine plage), l'USIM procède à une phase de resynchronisation avec le réseau.

Si SQuicc n'est pas trop éloigné de SQréseau (compris dans la plage précitée), il calcule f1(Ki, RAND, SQréseau) = XMAC et le compare à MAC. S'ils sont égaux, le réseau est authentifié par l'USIM.

L'USIM calcule également XRES en appliquant RAND et Ki à l'algorithme f2. La clé de session Kc est également calculée en appliquant RAND et la clé Ki de l'USIM à l'algorithme f3.

La procédure challenge/response peut donc être résumée comme suit :

L'USIM est authentifiée par le VLR 11 si le résultat XRES calculé par l'USIM et transmis au VLR est identique à SRES reçu du HLR/AuC 12. Le jeton d'authentification AUTN permet donc à l'USIM de vérifier si l'AuC est authentique et qu'il ne s'agit pas d'une attaque de type « man in the middle » par le réseau d'accès. Par ailleurs, si SRES est égal à XRES, le VLR considère que l'authentification mutuelle a abouti. On réalise ainsi une authentification mutuelle entre le réseau et l'USIM.

Ce mécanisme d'authentification est décrit dans 3GPP TS 31.102 (par exemple dans sa version 10.5.0 datée de mars 2012). Il repose sur l'échange de données en http (protocole IP).

Le problème que se propose de résoudre la présente invention est de permettre une authentification mutuelle entre un élément de sécurité (carte SIM) et son réseau, dans un réseau GSM, où le terminal coopérant avec l'élément de sécurité ne peut correspondre avec le réseau que par des SMS. Cette authentification mutuelle a pour but qu'un élément de sécurité de type GSM ne se connecte pas à une fausse BTS.

Un premier problème à résoudre pour atteindre cet objectif est de transmettre à l'entité SIM (détachable ou non) coopérant avec le terminal, non seulement la commande d'exécution de l'algorithme d'authentification (AuthCmd(Rand)) comprenant la valeur aléatoire RAND, mais aussi un AUTN pour que celle-ci puisse authentifier l'élément du réseau qui s'adresse à elle. Cet élément du réseau est soit un VLR soit un HLR/AuC.

Le problème est qu'un élément de sécurité GSM ne reçoit que 128 bits du réseau (longueur de RAND) et n'accepte donc pas de recevoir un RAND de 128 bits et un AUTN de 128 bits également.

Un deuxième problème résolu par la présente invention est qu'une simple authentification de l'élément de sécurité est facultative dans un réseau. C'est l'opérateur qui décide s'il demande une authentification. Ainsi, si un élément de sécurité de type GSM (carte SIM par exemple) ne reçoit pas de commande d'authentification, alors qu'elle est en communication avec le réseau, elle peut recevoir des commandes de ce réseau sans avoir été authentifiée ou sans avoir authentifié le réseau. Des actions malveillantes peuvent alors être lancées à partir de fausses stations de base.

Un troisième problème est que, dans un réseau GSM, l'élément de sécurité ne peut correspondre avec le réseau que par SMS. S'il n'a pas été authentifié par le réseau après l'envoi de XRES (Fig.1), le réseau rejette tout nouveau message de cet élément de sécurité. Il n'est donc pas possible de transmettre, comme dans un réseau UMTS, une valeur de resynchronisation SQuicc à ce réseau, aussi longtemps que l'élément de sécurité n'a pas été authentifié.

La présente invention a pour objectif de résoudre ces inconvénients.

Plus précisément, la présente invention propose un procédé d'authentification mutuelle entre un élément de sécurité d'un terminal de télécommunications et un élément d'un réseau de télécommunications, le procédé s'appliquant dans un réseau de télécommunications de type GSM. Selon l'invention, le procédé consiste à :

- Transmettre du réseau de télécommunications à l'élément de sécurité une commande d'exécution d'un algorithme d'authentification comprenant un jeton d'authentification élaboré par l'élément dudit réseau de télécommunications à partir d'une clé d'authentification et la valeur d'un compteur de séquence réseau ;
- Exécuter l'algorithme au niveau de l'élément de sécurité et, si la clé d'authentification est reconnue par l'élément de sécurité, vérifier qu'une valeur de compteur de séquence de l'élément de sécurité est comprise dans un intervalle déterminé par rapport à la valeur du compteur de séquence réseau et, si la valeur du compteur de séquence réseau n'est pas comprise dans l'intervalle déterminé :

    a) Vérifier que la valeur d'un compteur de l'élément de sécurité est supérieure à une valeur limite et, si oui :
    b) Transmettre un SMS du terminal de télécommunications à l'élément du réseau de télécommunications, ce SMS comprenant la valeur du compteur de séquence de l'élément de sécurité ;
    c) Au niveau de l'élément du réseau de télécommunications, synchroniser la valeur du compteur de séquence réseau avec la valeur du compteur de séquence de l'élément de sécurité.

Préférentiellement, le procédé consiste à retransmettre une nouvelle commande d'exécution de l'algorithme d'authentification après l'étape c) à l'élément de sécurité, cette nouvelle commande comprenant la valeur du compteur de séquence de l'élément de sécurité.

Avantageusement, le procédé selon l'invention consiste à informer l'utilisateur de l'élément de sécurité si la clé d'authentification n'est pas reconnue par l'élément de sécurité et/ou à ne plus répondre à aucune commande du réseau de télécommunications.

Préférentiellement, si la valeur du compteur de séquence réseau est comprise dans l'intervalle déterminé, l'élément de sécurité calcule une valeur, transmet cette valeur à l'élément du réseau de télécommunications et décrémente le compteur de l'élément de sécurité d'une unité.

Le procédé selon l'invention consiste avantageusement à détecter que le terminal de télécommunications est connecté au réseau de télécommunications et que si l'élément de sécurité n'a pas reçu de demande d'authentification, le procédé consiste à informer l'utilisateur de l'élément de sécurité que la demande d'authentification n'a pas été reçue et/ou à ne plus répondre à aucune commande du réseau de télécommunications.

Préférentiellement, le procédé consiste à informer l'utilisateur de l'élément de sécurité et/ou à ne plus répondre à aucune commande du réseau de télécommunications si la valeur du compteur de l'élément de sécurité est inférieure à la valeur limite.

Avantageusement, le jeton d'authentification est obtenu à partir d'un AES comprenant la valeur aléatoire.

Dans un mode de mise en oeuvre préférentiel, le jeton d'authentification est égal à :

$$AUTN = AES \, [Ki \oplus CST] \, (SQréseau \, \| \, RNG)$$

avec Ki la clé partagée entre le réseau et l'élément de sécurité, CST une constante sur 16 octets, SQréseau le compteur de séquence réseau, RNG un nombre occupant entre 16 - |SQréseau| octets et AUTN sur 16 octets.

Dans un autre mode de mise en oeuvre préférentiel, le jeton d'authentification est égal à :

AUTN = Truncation (AES [Ki ⊕ CST] (SQréseau ‖ RNG) avec AUTN compris entre 4 et 8 octets, avec Ki la clé partagée entre le réseau et l'élément de sécurité, CST une constante sur 16 octets, SQréseau le compteur de séquence réseau et RNG un nombre occupant entre 16 - |SQréseau| octets.

D'autres caractéristiques et avantages de l'invention apparaîtront à la lecture de la description suivante d'un mode de mise en oeuvre préférentiel, donné à titre illustratif et non limitatif, et des figures annexées, dans lesquelles :

- La figure 1 représente la procédure d'authentification mise en oeuvre dans un réseau GSM ;
- Les figures 2 et 3 représentent la procédure d'authentification mise en oeuvre dans un réseau UMTS ;
- La figure 4 représente une procédure d'authentification mutuelle mise en oeuvre dans un réseau GSM selon la présente invention.

Les figures 1 à 3 ont été décrites précédemment en référence à l'état de la technique.

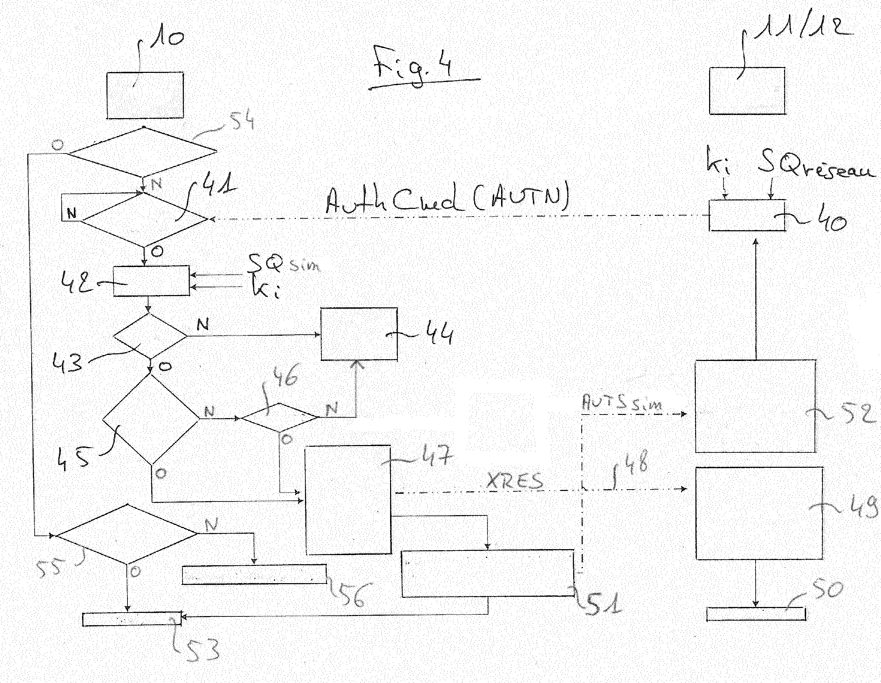

La figure 4 représente une procédure d'authentification mutuelle mise en oeuvre dans un réseau GSM selon la présente invention.

La présente invention propose de réaliser une authentification mutuelle entre un élément de sécurité, tel qu'une carte ayant une fonctionnalité SIM (extractible ou intégrée dans un terminal, par exemple dans un terminal M2M), et un élément d'un réseau de télécommunications, cet élément pouvant être un HLR/AuC ou un VLR, dans un réseau GSM.

A cette fin, l'invention propose d'abord de transmettre à la place de la commande RunGSMAlgo (RAND), dans un réseau GSM, une commande d'authentification de l'élément de sécurité, cette commande comprenant un AUTN qui est fonction de la clé partagée Ki et du compteur de séquences SQréseau.

Le challenge auquel se propose de répondre la présente invention est donc de transmettre une commande d'authentification comprenant un AUTN dont la longueur ne dépasse pas celle de RAND traditionnellement utilisée en GSM (16 octets).

Les considérations préliminaires sont prises en compte dans la présente invention :

La clé secrète Ki utilisée pour calculer le jeton d'authentification AUTN est également utilisée pour calculer SRES et Kc. Ceci permet d'éviter une baisse de sécurité sur cette clé secrète.

Dans un premier mode de mise en oeuvre, mettant en oeuvre un chiffrement AES (Advanced Encryption Standard ou AES (soit « standard de chiffrement avancé » en français), en mode ENC, la valeur d'AUTN est égale à :

$$AUTN = AES \, [Ki \oplus CST] \, (SQréseau \, \| \, RNG)$$

avec Ki la clé partagée sur 16 octets, CST une constante sur 16 octets, SQréseau un nombre occupant entre 4 et 16 octets, RNG un nombre occupant entre 16 - |SQréseau| octets et AUTN sur 16 octets, soit la longueur d'un RAND en GSM.

Le calcul de SRES et de la clé Kc (qui est une clé de session de 64 bits utilisée pour chiffrer la communication OTA au niveau du terminal en réponse à la valeur aléatoire reçue et de sa clé Ki en utilisant l'algorithme A8) est généralement utilisé en GSM pour produire un chiffre de 16 octets.

Les considérations prises en compte sont les suivantes :

- La valeur d'AUTN est également utilisée en tant que valeur aléatoire RAND pour calculer SRES et Kc. Ceci ne représente pas de problème de sécurité à partir du moment que l'AES n'est pas utilisé pour les calculs de SRES et de Kc.
- L'élément de sécurité peut déchiffrer AUTN pour récupérer SOréseau ‖ RNG, vérifier que SQréseau est dans le bon intervalle et choisir de ne pas calculer SRES et Kc. L'intervalle doit être choisi suffisamment petit pour qu'une valeur aléatoire d'AUTN puisse être acceptée par l'élément de sécurité avec une grande probabilité.

- La constante CST est introduite afin de modifier la clé Ki de manière déterministe lorsque cette clé est utilisée dans le but d'authentifier le réseau. L'introduction de cette constante CST permet donc de pouvoir distinguer cette utilisation conjointe de la clé Ki et du système de chiffrement par bloc AES d'autres utilisations éventuelles qui pourraient avoir des buts différents.
- RNG peut être généré à partir d'un générateur pseudo aléatoire. Dans ce cas, la distance acceptable entre SQréseau et SQuicc pourra être choisie faible. La valeur de RNG peut également être générée à partir notamment de SQréseau et permettre de vérifier une consistance dans le message d'entrée. Dans ce cas, il n'y a pas vraiment besoin de définir une notion de distance entre SQréseau et SQuicc et donc la tolérance peut être beaucoup plus importante. Enfin, dans un troisième mode de mise en oeuvre, RNG peut contenir un formatage/padding prédictible.
- Afin de générer un AUTN valable, il est nécessaire de générer un AES chiffré valable associé à un message en clair valable. En considérant par exemple 60 messages en clair (60 bits étant la longueur de SQréseau), la probabilité d'un attaquant de générer un AUTN valable est approximativement de $60/2^{128}$.
- Une recherche exhaustive de la clé Ki à partir de la connaissance d'AUTN nécessite $2^{127}$ recherches en moyenne.

Dans un deuxième mode de mise en oeuvre, on utilise un chiffrement par bloc AES afin de construire un code d'authentication de message MAC associé à un bloc de message:

L'AUTN peut se calculer de la façon suivante :

$$AUTN = \text{Truncation} (AES [Ki \oplus CST] (SQréseau \parallel RNG)$$

avec les valeurs précédemment indiquées, sauf pour l'AUTN qui est ici compris entre 4 et 8 octets. AUTN est ici transmis dans la commande RunGSMAlgo concaténé avec une valeur RAND' qui contient notamment la valeur de SQréseau.
Les calculs de SRES et de Kc sont effectués comme précédemment.
Les considérations à prendre en compte sont ici les suivantes :

- La valeur de RAND est obtenue par la concaténation d'AUTN et de SQréseau, avec optionnellement une partie de la chaîne binaire correspondant à RNG. A titre d'exemple, une partie de la chaîne binaire de RNG peut être obtenue en effectuant une troncation du « padding » (ajout de bits) qui est définit par le formatage, par exemple, il peut s'agir du format de padding 0x8000*.
- La valeur de SQréseau est transmise en clair.
- La SIM peut vérifier AUTN, grâce à la connaissance de Ki et de SQréseau ∥ RNG.
- La constante CST est introduite pour la même raison que précédemment invoquée.
- Un choix aléatoire d'AUTN ne produira un AUTN valable pour $1/2^{32}$ des cas, si l'AUTN est de longueur 32 bits.
- La connaissance d'un seul AUTN ne permet pas de retrouver une clé Ki unique.

Les deux solutions précédemment exposées utilisant l'AES permettent donc d'assurer une protection maximale en cas d'attaque par une fausse BTS.
D'autres solutions sont bien sûr possibles, le demandeur ayant présenté les solutions les plus optimales pour transmettre un AUTN au terminal dans un réseau GSM, en tant que nombre aléatoire ou en même temps qu'un nombre aléatoire RAND', sans aucune modification des protocoles standardisés en 2G. Comme dans un réseau 3G, AUTN est calculé à partir de SQréseau et de la clé Ki.
En regard de la figure 4, le procédé d'authentification mutuelle selon l'invention est présenté.
Un élément du réseau de télécommunications, soit un VLR 11, soit le HLR/AuC 12 du réseau auquel l'utilisateur de l'élément de sécurité 10 est abonné, calcule (étape 40) la valeur AUTN comme précédemment indiqué à partir de SQréseau et de la clé Ki, et transmet une commande d'authentification AuthCmd(AUTN) à l'élément de sécurité 10. Cette commande s'appelle dans le standard GSM précédemment mentionné RunGSMAlgo. L'élément de sécurité 10 vérifie en boucle, lors d'une étape 41, s'il a reçu cette commande, jusqu'à la réception de celle-ci. A réception de la commande d'authentification, l'élément de sécurité 10 vérifie, lors d'une étape 42, si l'AUTN reçu est correct, à l'aide de SQsim et de la clé Ki stockée localement. SQsim est le compteur de séquences de l'élément de sécurité 10 et correspond au compteur de séquences SQuicc utilisé en UMTS.
D'abord, lors d'une étape 43, il est vérifié si la clé Ki reçue du réseau est correcte. Si elle ne l'est pas (étape 44), l'élément de sécurité 10 se met en état de sécurité (refuse toute nouvelle communication) et/ou informe l'utilisateur qu'une anomalie s'est produite (car elle a pu être l'objet d'une attaque par une fausse station de base).
Ensuite, si la clé Ki reçue du réseau est correcte, l'élément de sécurité 10 vérifie, lors d'une étape 45, que le compteur de séquences SQsim est compris dans un intervalle déterminé par rapport à la valeur du compteur de séquence réseau SQréseau.

Si le compteur de séquences SQsim n'est pas compris dans l'intervalle déterminé, il faut resynchroniser le réseau (SQréseau) et l'élément de sécurité 10 (SQsim). Avant de procéder à cette resynchronisation, il est vérifié que la valeur d'un compteur C de l'élément de sécurité est supérieure à une valeur limite, lors d'une étape 46. Si cette valeur limite a été atteinte (par exemple la valeur du compteur est arrivée à 0), l'élément de sécurité 10 se met en état de sécurité (étape 44) et n'accepte plus aucune commande du réseau. Accessoirement, l'élément de sécurité informe l'utilisateur par l'interface homme-machine de l'équipement dans lequel il se trouve.

Si la valeur limite n'a pas été atteinte, l'élément de sécurité 10 calcule, lors d'une étape 47, la valeur XRES à partir de sa clé Ki et de l'AUTN reçu. Il décrémente également la valeur du compteur C précédemment mentionné d'une unité. La valeur de XRES est transmise au réseau lors d'une étape 48 et le réseau vérifie que XRES est égal à SRES lors d'une étape 49. Si l'égalité est vérifiée, cela signifie que l'élément de sécurité connait la clé Ki et l'authentification mutuelle est vérifiée. Le réseau et l'élément de sécurité sont alors prêts à communiquer (étape 50).

Si la valeur du compteur C de l'élément de sécurité n'a pas atteint la valeur limite et si SQsim n'est pas dans l'intervalle déterminé, l'élément de sécurité calcule, lors d'une étape 51, une valeur AUTSsim qui est fonction de SQsim et de Ki. Cette valeur est, selon l'invention, encapsulée dans un SMS et transmise au réseau (HLR/AuC). Ce dernier resynchronise alors son SQréseau avec la valeur de SQsim reçue, lors d'une étape 52. Le HLR/AuC et l'élément de sécurité comprennent alors les mêmes valeurs de compteur de séquence (SQsim = SQréseau). Le réseau retransmet alors un nouveau AUTN à l'élément de sécurité 10 dans une nouvelle commande d'authentification. Les étapes 41 à 48 sont alors reproduites et, en principe, un XRES devrait être transmis au réseau (étape 48) lors de cette nouvelle passe.

Après exécution de l'étape 51, l'élément de sécurité 10 considère qu'il est prêt à entrer en communication (étape 53) et attend de la part du VLR un message d'acceptation du service demandé (transmission de voix, données ou mise en place d'un service SMS par exemple). Ce message d'acceptation ne sera cependant transmis au terminal de télécommunications que lorsque l'authentification mutuelle sera achevée.

Le compteur C de l'élément de sécurité est prévu dans la présente invention pour permettre à l'élément de sécurité de transmettre plusieurs SMS à l'élément du réseau (HLR) de télécommunications. En théorie, deux SMS sont suffisants mais on peut en prévoir plus, ceci dépendant du temps que mettra le réseau pour synchroniser son SQréseau avec le SQsim reçu.

L'invention propose également une authentification obligatoire du réseau par l'élément de sécurité 10. A cet effet, il est proposé de vérifier, lors d'une étape 54, que l'élément de sécurité 10 est bien attaché au réseau. S'il n'est pas attaché au réseau, l'étape 41 de détection de réception de la commande d'authentification est lancée (RunGSMAIgo (AUTN) ou encore AuthCmd (AUTN)). Si l'élément de sécurité est attaché au réseau, on vérifie, lors d'une étape 55, que le réseau a été authentifié. Si c'est le cas, le terminal attend le service demandé (étape 53). Dans le cas contraire, l'élément de sécurité 10 passe dans un état où il n'accepte plus de commandes du réseau et/ou informe éventuellement l'utilisateur que le réseau n'a pas été authentifié (étape 56). Ceci oblige le réseau à s'authentifier auprès de l'élément de sécurité, sans quoi ce dernier devient inopérant.

L'invention ne nécessite que des modifications au niveau du HLR/AuC et au niveau de l'élément de sécurité, elle est donc sans conséquences au niveau des terminaux communiquant avec ces éléments de sécurité, par exemple au niveau de véhicules ou de machines qui les embarquent. Seule l'introduction d'un AUTN dans la commande de demande d'authentification du terminal 2G est introduite (avec le RAND connu), ce qui ne nécessite pas de modification des protocoles 2G.

**Revendications**

1. Procédé d'authentification mutuelle entre un élément de sécurité (10) d'un terminal de télécommunications et un élément (11/12) d'un réseau de télécommunications, ledit procédé s'appliquant dans un réseau de télécommunications de type GSM, ledit procédé consistant à :

   - Transmettre dudit réseau de télécommunications audit élément de sécurité (10) une commande d'exécution d'un algorithme d'authentification comprenant un jeton d'authentification (AUTN) élaboré par ledit élément (11/12) dudit réseau de télécommunications à partir d'une clé d'authentification (Ki) et la valeur d'un compteur de séquence réseau (SQréseau) ;
   - Exécuter ledit algorithme au niveau dudit élément de sécurité (10) et, si ladite clé d'authentification (Ki) est reconnue par ledit élément de sécurité (10), vérifier qu'une valeur de compteur de séquence (SQsim) dudit élément de sécurité (10) est comprise dans un intervalle déterminé par rapport à ladite valeur dudit compteur de séquence réseau (SQréseau) et, si ladite valeur dudit compteur de séquence réseau (SQréseau) n'est pas comprise dans ledit intervalle déterminé :

a) Vérifier que la valeur d'un compteur dudit élément de sécurité (10) est supérieure à une valeur limite et, si oui :
b) Transmettre un SMS dudit terminal de télécommunications audit élément (11/12) dudit réseau de télécommunications, ledit SMS comprenant ladite valeur dudit compteur de séquence dudit élément de sécurité (SQsim) ;
c) Au niveau dudit élément dudit réseau de télécommunications (11/12), synchroniser la valeur dudit compteur de séquence réseau (SQréseau) avec ladite valeur dudit compteur de séquence dudit élément de sécurité (SQsim).

2. Procédé selon la revendication 1, **caractérisé en ce qu'il** consiste à retransmettre une nouvelle commande d'exécution dudit algorithme d'authentification après l'étape c) audit élément de sécurité (10), ladite nouvelle commande comprenant ladite valeur dudit compteur de séquence (SQsim) dudit élément de sécurité (10).

3. Procédé selon l'une des revendications 1 et 2, **caractérisé en ce qu'il** consiste à informer l'utilisateur dudit élément de sécurité (10) si ladite clé d'authentification (Ki) n'est pas reconnue par ledit élément de sécurité (10) et/ou à ne plus répondre à aucune commande dudit réseau de télécommunications.

4. Procédé selon l'une des revendications 1 à 3, **caractérisé en ce que** si ladite valeur dudit compteur de séquence réseau (SQréseau) est comprise dans ledit intervalle déterminé, ledit élément de sécurité (10) calcule une valeur (XRES), transmet cette valeur audit élément dudit réseau de télécommunications (11/12) et décrémente ledit compteur dudit élément de sécurité (10) d'une unité.

5. Procédé selon l'une des revendications 1 à 4, **caractérisé en ce qu'il** consiste à détecter que ledit terminal de télécommunications est connecté audit réseau de télécommunications et que si ledit élément de sécurité (10) n'a pas reçu de demande d'authentification, ledit procédé consiste à informer l'utilisateur dudit élément de sécurité (10) que ladite demande d'authentification n'a pas été reçue et/ou à ne plus répondre à aucune commande dudit réseau de télécommunications.

6. Procédé selon l'une des revendications 1 à 5, **caractérisé en ce qu'il** consiste à informer l'utilisateur dudit élément de sécurité (10) et/ou à ne plus répondre à aucune commande dudit réseau de télécommunications si ladite valeur dudit compteur dudit élément de sécurité est inférieure à ladite valeur limite.

7. Procédé selon l'une des revendications 1 à 6, **caractérisé en ce que** ledit jeton d'authentification est obtenu à partir d'un AES comprenant ladite valeur aléatoire (RAND).

8. Procédé selon la revendication 7, **caractérisé en ce que** ledit jeton d'authentification est égal à :

$$AUTN = AES\,[Ki \oplus CST]\,(SQréseau \parallel RNG)$$

avec Ki la clé partagée entre ledit réseau et ledit élément de sécurité (10), CST une constante sur 16 octets, SQréseau ledit compteur de séquence réseau, RNG un nombre occupant entre 16 - |SQréseau| octets et AUTN sur 16 octets.

9. Procédé selon la revendication 7, **caractérisé en ce que** ledit jeton d'authentification est égal à :

AUTN = Truncation (AES [Ki ⊕ CST] (SQréseau ‖ RNG) avec AUTN compris entre 4 et 8 octets, avec Ki la clé partagée entre ledit réseau et ledit élément de sécurité (10), CST une constante sur 16 octets, SQréseau ledit compteur de séquence réseau et RNG un nombre occupant entre 16 - |SQréseau| octets.

Fig. 1

Fig. 2

Fig.3

IMSI

IMSI

RAND , AUTN

RAND , SRES $K_c$ , AUTN , $I_k$

XRES

Fig. 4

AuthCmd (AUTN)

ki  SQréseau

SQsim
ki

AUTSsim

XRES

Europäisches
Patentamt

European
Patent Office

Office européen
des brevets

**RAPPORT DE RECHERCHE EUROPEENNE**

Numéro de la demande

EP 13 30 5364

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | FANIAN A ET AL: "A new mutual authentication protocol for GSM networks", ELECTRICAL AND COMPUTER ENGINEERING, 2009. CCECE '09. CANADIAN CONFERENCE ON, IEEE, PISCATAWAY, NJ, USA, 3 mai 2009 (2009-05-03), pages 798-803, XP031477434, ISBN: 978-1-4244-3509-8 * page 800, colonne de droite, dernière ligne - page 801, colonne de gauche, dernière ligne * | 1-9 | INV. H04W12/06 H04L29/06 |
| A | WO 2006/084183 A1 (QUALCOMM INC [US]; ROSE GREGORY GORDON [US]; SEMPLE JAMES [GB]; NASIEL) 10 août 2006 (2006-08-10) * alinéa [0055] - alinéa [0061]; figure 6 * | 1-9 | |
| A | WO 02/069560 A1 (NOKIA INC [US]) 6 septembre 2002 (2002-09-06) * page 10, ligne 15 - page 11, ligne 25; figure 4 * | 1-9 | DOMAINES TECHNIQUES RECHERCHES (IPC) |
| | | | H04W H04L |

Le présent rapport a été établi pour toutes les revendications

| Lieu de la recherche | Date d'achèvement de la recherche | Examinateur |
|---|---|---|
| La Haye | 29 août 2013 | Raposo Pires, João |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE**
**RELATIF A LA DEMANDE DE BREVET EUROPEEN NO.**          EP 13 30 5364

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

29-08-2013

| Document brevet cité au rapport de recherche | Date de publication | Membre(s) de la famille de brevet(s) | Date de publication |
|---|---|---|---|
| WO 2006084183 A1 | 10-08-2006 | AT 511292 T | 15-06-2011 |
| | | AU 2006210510 A1 | 10-08-2006 |
| | | BR PI0607359 A2 | 01-09-2009 |
| | | CA 2597475 A1 | 10-08-2006 |
| | | DK 1854263 T3 | 19-09-2011 |
| | | EP 1854263 A1 | 14-11-2007 |
| | | EP 2259539 A2 | 08-12-2010 |
| | | IL 185044 A | 31-07-2012 |
| | | JP 4763726 B2 | 31-08-2011 |
| | | JP 2008530861 A | 07-08-2008 |
| | | KR 20070096060 A | 01-10-2007 |
| | | MY 142227 A | 15-11-2010 |
| | | NZ 560464 A | 29-10-2010 |
| | | PT 1854263 E | 05-07-2011 |
| | | RU 2374778 C2 | 27-11-2009 |
| | | TW I394466 B | 21-04-2013 |
| | | TW 201244437 A | 01-11-2012 |
| | | US 2006205388 A1 | 14-09-2006 |
| | | US 2010174907 A1 | 08-07-2010 |
| | | US 2011238972 A1 | 29-09-2011 |
| | | WO 2006084183 A1 | 10-08-2006 |
| WO 02069560 A1 | 06-09-2002 | EP 1378091 A1 | 07-01-2004 |
| | | US 2002178358 A1 | 28-11-2002 |
| | | WO 02069560 A1 | 06-09-2002 |

EPO FORM P0460

Pour tout renseignement concernant cette annexe : voir Journal Officiel de l'Office européen des brevets, No.12/82